# EUROPÄISCHE PATENTSCHRIFT

(11) **EP 1 972 809 B1**
(45) Veröffentlichungstag und Bekanntmachung des Hinweises auf die Patenterteilung: **21.05.2014**
(21) Anmeldenummer: 08150499.5
(22) Anmeldetag: 22.01.2008
(51) Int. Cl.: F16D 3/38, F16D 3/41, F16C 21/00

(54) **Drehzapfenhalter und -lager, insbesondere für Karadangelenk**
Holder and bearing of a trunnion , in particular for a universal joint
Support ou palier de tourillon, en particulier pour une articulation de cardan

(30) Priorität: 19.03.2007 US 918872 P
(43) Veröffentlichungstag der Anmeldung: 24.09.2008
(73) Patentinhaber: Schaeffler Technologies GmbH & Co. KG, 91074 Herzogenaurach (DE)
(72) Erfinder: Lefew, Kenneth, Hartsville, SC 29550 (US); Rogers, Kenneth, Huntersville, NC 28078 (US); Therriault, John, Milford, CT 06460 (US)

(56) Entgegenhaltungen:
- JP-A- 9 049 530
- US-A- 5 106 342
- US-B1- 6 264 566

## Beschreibung

### Gebiet der Erfindung

### Querverweis auf verwandte Anmeldung

Die vorliegende Anmeldung basiert auf und beansprucht die Priorität der am 19. März 2007 eingereichten US-Provisional Patent Application mit der lfd. Nr. 60/918,872 und dem Titel TRUNNION SUPPORT UND BEARING PARTICULARLY FOR UNIVERSAL JOINT (DREHZAPFENHALTER UND -LAGER, INSBESONDERE FÜR KARDANGELENK), auf deren gesamten Inhalt hiermit ausdrücklich Bezug genommen wird.

### Hintergrund der Erfindung

Ein Kardangelenk wird in der Regel zwischen Wellen montiert, um ein Drehmoment über einen Winkel zu übertragen. Beispiele für die Verwendung von Kardangelenken sind in Wellen, die Kraftfahrzeuglenksäulen mit dem Lenkgetriebe verbinden, Antriebswellen für Kraftfahrzeuge, Lastwagen und Fahrzeuge und Wellen, die in Industriemaschinen, Geländeausrüstungen, Flugzeugen usw. verwendet werden, zu finden. Da sich die Wellen drehen und in der Regel einen Winkel am Kardangelenk definieren, besteht zwischen dem Kreuzstück oder Zapfenkreuz des Kardangelenks und den Jochen an den mit dem Kreuzstück oder Zapfenkreuz des Kardangelenks verbundenen Wellen oder Teilen eine kontinuierliche Relativbewegung.

Ein Kardangelenk ist eine in der Technik wohlbekannte Struktur. Ein Hauptelement des Kardangelenks ist ein Kreuzstück, das auch als Zapfenkreuz bezeichnet wird. Das Kreuzstück weist jeweilige Drehzapfenpaare auf, die von der Achse des Kreuzstücks in entgegengesetzten Richtungen radial vorragen. Jedes Wellenende oder Teil, das am Kardangelenk verbunden werden soll, weist ein mit dem Kreuzstück zu verbindendes Joch auf. Jedes Joch enthält ein Paar beabstandeter Arme, die jeweils an einem eines Paars einander gegenüberliegender Drehzapfen befestigt sind. Jeder Arm jedes Jochs nimmt einen jeweiligen vorragenden Drehzapfen auf. Der Jocharm weist eine Öffnung auf, die den Drehzapfen aufnimmt.

Wenn die Welle am Gelenk gekrümmt ist, wird der Krümmung bei Drehung der Welle dadurch Rechnung getragen, dass sich jeder Jocharm umfangsmäßig um seinen Drehzapfen bewegt, wenn die das Gelenk enthaltende Welle gedreht wird. Um solch einer Bewegung Rechnung zu tragen, ist zwischen dem Äußeren des Drehzapfens und dem Inneren der Drehzapfenaufnahmeöffnung im Jocharm ein Radiallager angeordnet. Die Öffnung für den Drehzapfen wird in der Regel durch eine im Jocharm installierte Schale definiert. Das Radiallager ist zwischen dem Äußeren des Drehzapfens und dem Inneren der Schale angeordnet. Das Radiallager ist in der Regel ein Nadellager, das aus einer Umfangsanordnung von sich axial erstreckenden Nadelrollen besteht, die dünne, längliche zylindrische Rollen sind. In der Regel wird das Lager in der in der Öffnung des Jocharms angeordneten Drehzapfenhalteschale aufgenommen, und das Lager dreht sich bezüglich des Äußeren des Drehzapfens und des Inneren der Schale.

Die Schale für den Drehzapfen ist an dem Ende offen, in das der Drehzapfen installiert wird, und ist in der Regel am äußeren distalen Ende hinter dem Ende des Drehzapfens und hinter dem Radial- oder Nagellager geschlossen. Wenn das Nadellager in der Schale installiert ist, erstrecken sich die Nadeln in der Regel nicht zum geschlossenen Ende der Schale. Zwischen den äußeren distalen Enden der Lagernadeln und dem geschlossenen Ende der Schale kann ein Nadelrollenabstandsstück vorgesehen sein, das die äußeren Enden der Nadeln abstützen würde.

Bei einigen Anwendungen von Drehzapfen oder Schalen für ein Kardangelenk befindet sich eine Druckscheibe am äußeren Ende der Schale außerhalb des Drehzapfens, die als eine Druck- und Verschleißfläche dient, welche durch die äußere Drehzapfenfläche des Kardangelenkkreuzstücks- oder -zapfenkreuzes angelegte Axialbelastungen aufnimmt. In einem Kardangelenk mit einer Druckscheibe und einem Nadelrollenabstandsstück ist das Nadelrollenabstandsstück so geformt und bemessen, dass es gewährleistet, dass die Nadelrollen nicht über die Eckabsätze oder den distalen äußeren Umfangsrand des Drehzapfens überstehen. Konfigurationen mit integrierter Druckscheibe und integriertem Nadelrollenabstandsstück sind bei vielen Kardangelenkanwendungen bekannt. Zum Beispiel werden solche integralen, einstückigen Anordnungen in den US-Patenten 4,050,130 und 4,317,341 vorgeschlagen.

Bei anderen Anwendungen kann es wünschenswert sein, dass die Druckscheibe und das Nadelrollenabstandsstück, die in der Drehzapfenschale vorgesehen sind, getrennt sind, um als separate Bauteile zu wirken. Das Vorsehen getrennter Druckscheiben- und Nadelrollenabstandsstückbauteile kann beim Montageprozess des Lagers und bei der Montage des Lagers in die Kardangelenke ein Problem darstellen. Während des Montageprozesses des Lagers kommt es zu normalen Vibrationen und Erschütterungen, und es liegt eine unvorhersagbare manuelle Handhabung vor, die zu individuellen Verschiebungen der Druckscheibe und des Nadelrollenabstandsstücks führen können. Bei diesen Verschiebungen kann die Druckscheibe unter das und insbesondere radial am Nadelrollenabstandsstück vorbei gleiten, wodurch es bei der Kardangelenkmontage später zu Problemen kommen kann. Während der Montage des Kardangelenks kann bei der Handhabung des Lagers vor seiner Montage in den Arm des Jochs eine von dem Nadelrollenabstandsstück getrennte Druckscheibe vollständig aus dem Lager fallen, wodurch die Möglichkeit eines frühen Versagens des Kardangelenks verstärkt wird. Um diese Problem zu vermeiden, ist während des Herstellungsprozesses eine erhöhte Wachsamkeit erforderlich, wodurch letztendlich die Kosten der Lageranordnung und der Kardangelenkmontage unter Verwendung der Lageranordnung erhöht werden.

Dieses Problem ist in der Technik erkannt worden, und die US-PS 5,106,342 zeigt einen Lösungsversuch. Die Druckscheibe und das Nadelrollenabstandsstück weisen eine in etwa symmetrische Dicke auf. Zwischen der Druckscheibe und dem Nadelabstandsstück sind Verbindungsnasen vorgesehen. Diese Nasen sind bei der Installation der Kombination und des Drehzapfens in der Kombination verformbar, um einer axialen Verschiebung der Druckscheibe entlang der Achse der Schale oder des Drehzapfens Rechnung zu tragen, und diese axiale Verschiebung ist für die Nadelrollenverschiebung relevant. Ein Bruch der Nasen ist eine offenbarte Alternative.

Dieses System nach dem Stand der Technik weist jedoch Nachteile auf. Sowohl das Antireversier-Vermögen als auch die Verformung der Verbindungsnasen zur relativen axialen Verschiebung der Bauteile erfordert eine symmetrische Anordnung der ersten Scheibendicke bezüglich der Nadelabstandsstückdicke. Diese Designsymmetrie gestattet möglicherweise keinen vorhersagbaren und vollständigen Bruch aller Verbindungsnasen, wenn eine Trennung der Druckscheibe von dem Abstandsstück erforderlich ist. Wenn die Druckscheibe stattdessen vor der Montage des Kardangelenks von dem Nadelrollenabstandsstück getrennt wird, kann die Druckscheibe aus der Lageranordnung fallen.

Verbindungsnasen zwischen dem Abstandsstück und der Druckscheibe brechen wahrscheinlich bei der Montage und insbesondere beim Einführen des Drehzapfens in die Lagerschale. Beim Bruch verbleiben Bruchstücke der Verbindungsnase an einem oder beiden der zuvor zusammengefügten Bauteile. Die Position der Verbindungsnasenreste nach dem Bruch ist nicht vorhersagbar, falls oder wenn sich die Druckscheibe von dem Nadelrollenabstandsstück trennt. Diese Bruchstücke können zu einer möglichen Behinderung des Kardangelenks und des Drehzapfens durch die Nasenreste führen. Falls sich die Druckscheibe bei der Montage des Lagers von dem Nadelrollenabstandsstück trennt, könnte die Druckscheibe immer noch unter das Nadelrollenabstandsstück gleiten.

### Kurze Darstellung der Erfindung

Die vorliegende Erfindung soll sich mit allen der vorhergehenden Probleme befassen, die möglicherweise durch ursprünglich getrennte Druckscheiben- und Nadelrollenabstandsstückbauteile oder durch das Vorsehen von Nasenverbindungen der in im Patent Nr. 5,106,342 offenbarten Art verursacht werden.

Gemäß der Erfindung sind eine Druckscheibe und ein Nadelrollenabstandsstück durch Sollbruchverbindungsnasen zur anfänglichen Bildung eines einzigen integrierten Bauteils verbunden. Die Sollbruchverbindungsnasen sind dazu ausgeführt, im richtigen Stadium während des Gelenkmontageprozesses zu brechen, um die Druckscheibe von dem kombinierten Bauteil zu trennen. Die Druckscheibe und das Nadelrollenabstandsstück können während des gesamten Lagermontageprozesses über die Verbindungsnasen verbunden bleiben, wodurch verhindert werden würde, dass die Druckscheibe während der Lagermontage unter das Nadelrollenabstandsstück gleitet. Wenn ein Bruch während des Lagermontageprozesses wünscht wird, kann dieser natürlich auch erfolgen. Ein Bruch der Sollbruchverbindungsnasen und Trennung der Druckscheibe von dem Nadelrollenabstandsstück kann zu jedem angemessenen Zeitpunkt während des Lagermontageprozesses oder während des anschließenden Kardangelenkmontageprozesses unter Verwendung des Lagers durchgeführt werden.

Die Form, die Konfiguration und die Umfangsbreite und axiale Dicke der Verbindungsnasen, die Position der Verbindungsnasen an der Druckscheibe, die Konfiguration der Druckscheibe zum Verhindern, dass sie am Nadelrollenabstandsstück vorbei fällt, sind alles Verbesserungen gegenüber der Ausführung nach dem Stand der Technik.

Insbesondere sind die Nasen so dimensioniert, dass mindestens eine Abmessung der axialen Dicke und/oder der Umfangsbreite der Nase entweder näher an der Druckscheibe oder am Abstandsstück größer ist als die gleiche Art der Abmessung der Nase näher am jeweils anderen Teil, am Abstandsstück oder an der Druckscheibe.

Die kombinierte Ausführung mit Sollbruchverbindungsnasen vereinfacht den Lagermontageprozess, verringert das Erfordernis zusätzlicher manueller Handhabung zusätzlicher Sichtinspektionen, erhöht die Gesamtmontageproduktivität, verringert die Gefahr einer anschließenden Fehlfunktion des Gelenks und verringert deshalb Kundenbeschwerden aufgrund von Fehlfunktion und aufgrund dessen, dass die Druckscheibe unter das Nadelrollenabstandsstück gleitet.

### Kurze Beschreibung der Zeichnungen

Figur 1 ist eine perspektivische Ansicht eines Kreuzstücks, eines Zapfenkreuzes oder eines Verbinders für ein Kardangelenk mit Drehzapfen daran und zeigt des Weiteren einen Jocharm, der einen Drehzapfen aufnimmt.
Figur 2 ist eine Seiten-Querschnittsansicht des Nadelrollenabstandsstücks und der Druckscheibe, die gemäß der Erfindung miteinander verbunden sind.
Figur 3 ist eine Rückansicht über die Achse, die eine Druckscheibe und ein Nadelrollenabstandsstück gemäß der Erfindung zeigen.
Figur 4 ist eine vergrößerte Ansicht eines Teils von Figur 3, mit Blickrichtung über die Achse, die eine Umfangsrichtungskonfiguration der Nasenverbindung zeigt.
Figur 5 ist eine vergrößerte Teilansicht entlang der Achse des Nadelrollenabstandsstücks und der Druckscheibe, die die Axialrichtungskonfiguration, die Anordnung und die Dicke der Nasenverbindung zeigt.
Figur 6 ist eine vergrößerte Ansicht eines Teils des Umfangsbereichs der Druckscheibe am Nadelrollenabstandsstück zur Darstellung seiner Konfiguration, der dazu beiträgt, zu verhindern, dass die Druckscheibe am Nadelrollenabstandsstück vorbei fällt.
Figur 7 zeigt einen Querschnitt einer Lagerschale ohne Drehzapfen darin, in der das Nadelrollenabstandsstück und die Druckscheibe, die über die Nase verbunden sind, angeordnet sind.
Figur 8 ist eine Ansicht gemäß Figur 7 nach der Trennung der Druckscheibe und des Nadelrollenabstandsstücks.
Figur 9 ist die gleiche Ansicht wie Figur 8, die eine andere Ausführung einer Drehzapfenschale zeigt.

### Beschreibung der bevorzugten Ausführungsform

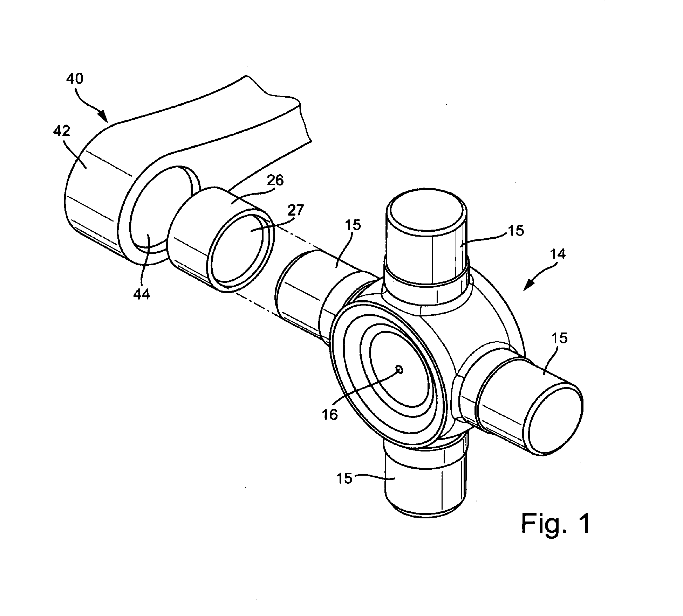

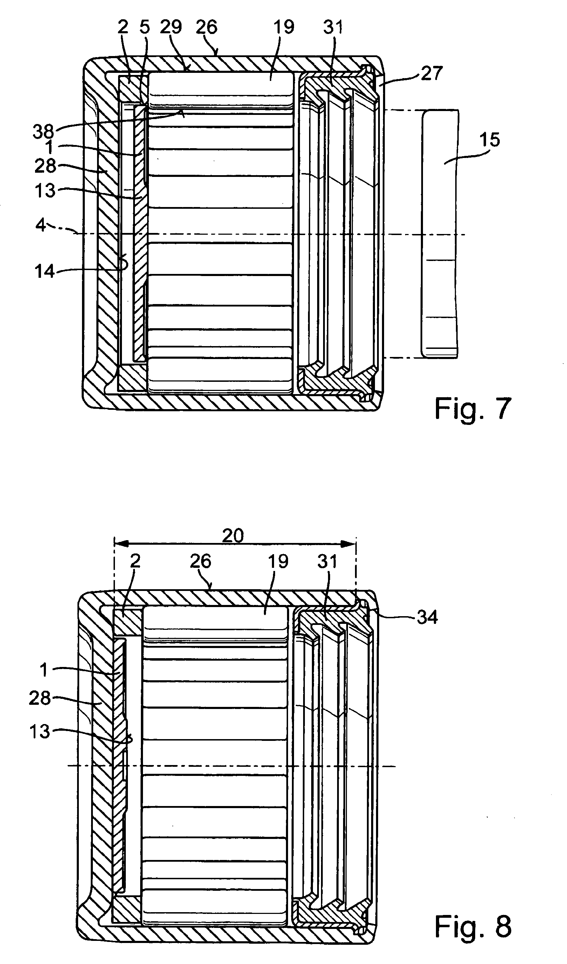

Figur 1 der Zeichnungen zeigt das Kreuzstück, das Zapfenkreuz oder den Verbinder 14 eines (nicht gezeigten) Kardangelenks mit vier Drehzapfen 15, die von der mittleren Achse 16 des Kreuzstücks in einer planaren Anordnung und gleichmäßig um den Umfang des Kreuzstücks beabstandet vorragen. Jedes einander gegenüberliegende Paar vorragender Drehzapfen 15 wird in einem Jocharm 42 der beiden (nicht gezeigten) Joche, die an den Drehzapfen des Kreuzstücks oder des Zapfenkreuzes 14 angeordnet sind, aufgenommen. Ein in Figur 7 gezeigtes Lager 19 ist um den Umfang jedes Drehzapfens herum angeordnet, damit dieser sich innerhalb einer jeweiligen Drehzapfenschale 26 drehen kann, welche in einer Öffnung 44 in dem Jocharm 42, in dem der Drehzapfen aufgenommen wird, befestigt ist.

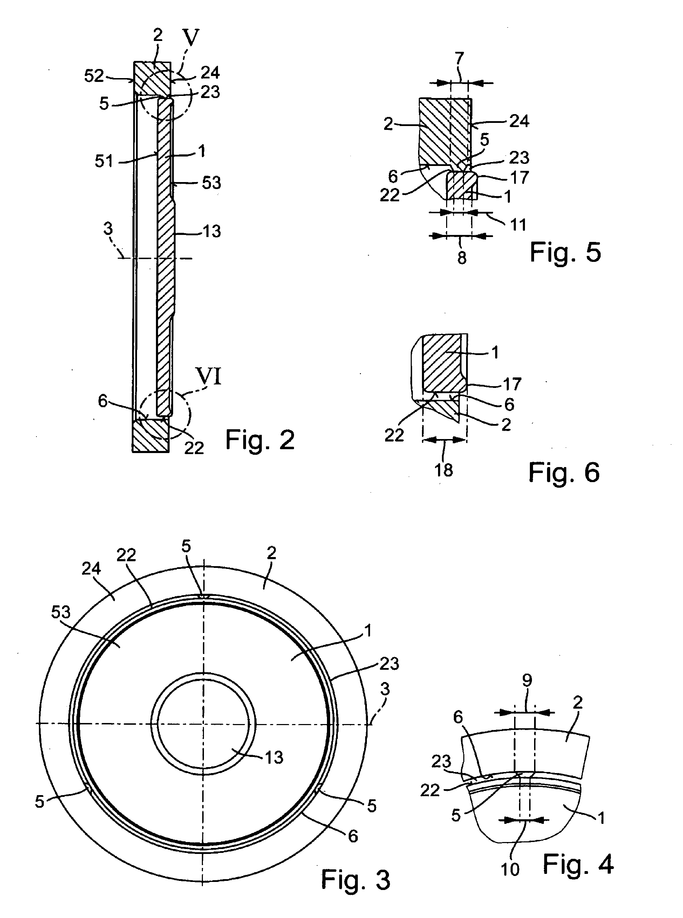

Wie in den Figuren 2 und 3 gezeigt, befindet sich eine Druckscheibe 1 mittig des Nadelrollenabstandsstücks 2, und mindestens ein Teil der Druckscheibe bis zur ganzen Druckscheibe ist in einem kurzen Abstand radial einwärts des ringförmigen Nadelrollenabstandsstücks 2 angeordnet. Wie in den Figuren 2 - 5 gezeigt, sind die Druckscheibe 1 und das Abstandsstück 2 jeweils in Radialrichtung so bemessen, dass sie einen konstanten radialen Zwischenraum 23 umfangsmäßig um den und zwischen dem radialen Außenumfang 22 der Druckscheibe 1 und dem radialen Innenumfang 6 des Nadelrollenabstandsstücks 2 definieren. Die Druckscheibe und das Nadelrollenabstandsstück teilen die gemeinsame Achse 3, die mit der mittleren Achse 4 des Lagers (Figur 7) und der mittleren Achse 16 des Drehzapfens (Figur 1) zusammenfällt.

Sowohl die Druckscheibe 1 als auch das Abstandsstück 2 weisen eine erste 51, 52 bzw. zweite 53, 24 Seite, die sich axial gegenüberliegen, und jeweils eine axiale Dicke zwischen ihren axialen Seiten auf. Beide ersten Seiten 51, 52 weisen in die gleiche Richtung in die unten beschriebene Schale 26, und die zweiten Seiten 53, 24 weisen aus der Schale heraus. Das Abstandsstück 2 ist axial dicker als die Druckscheibe 1.

In den Figuren 2 - 5 gezeigte Sollbruchverbindungsnasen 5 erstrecken sich von dem Außenumfang 22 der Druckscheibe 1 radial zum Innendurchmesser 6 des Nadelrollenabstandsstücks 2. Es kann eine einzige solche Verbindungsnase verwendet werden, jedoch wird in der Regel in Abhängigkeit von den Herstellungs- und Anwendungsanforderungen mehr als eine verwendet. Wenn mehr als eine Sollbruchverbindungsnase verwendet wird, können die Nasen entweder gleichmäßig um den Umfangsraum 23 zwischen der Druckscheibe und dem Nadelrollenabstandsstück beabstandet sein, wie in Figur 3 gezeigt, oder asymmetrisch beabstandet sein.

Wie in den Figuren 2, 5 und 7 gezeigt, befindet sich die axiale Position der Druckscheibe 1 allgemein asymmetrisch innerhalb des Nadelrollenabstandsstücks 2, wobei die Scheibe im Allgemeinen weiter zur zweiten Seite 44 des Abstandsstücks und von dem geschlossenen Ende der Drehzapfenschale 26, in der der Drehzapfen 15 und ein Lager 19 aufgenommen sind, weg vorgesehen ist und die erste Seite 41 der Scheibe von der ersten Seite 43 des Abstandsstücks nach innen beabstandet ist. Die tatsächliche axiale Position der Druckscheibe hängt von der Axialrichtungsdicke 7 der Verbindungsnasen 5 (Figur 5), der Axialrichtungsdicke 8 der Druckscheibe 1 und des Abstandsstücks 2 und der erforderlichen axialen Richtungsverschiebung der Druckscheibe, die dazu erforderlich ist, einen vollständigen Bruch aller der Sollbruchverbindungsnasen 5 zu gewährleisten, ab.

Die räumliche Geometrie und Konfiguration der Sollbruchverbindungsnasen ist so ausgeführt, dass Reste der Sollbruchverbindungsnasen nach der Trennung der Bauteile vorhersagbar bei einem (einer) ausgewählten des Nadelrollenabstandsstücks und/oder der Druckscheibe oder bei beiden Bauteilen bleiben. Wie in Figur 4 gezeigt, kann zum Beispiel die Umfangsbreite der Sollbruchnase am Innenumfang 6 des Abstandsstücks bezüglich der Umfangsbreite der Nase am Außenumfang 22 der Druckscheibe 10 größer sein. Darüber hinaus oder als Alternative kann, wie in Figur 5 gezeigt, die axiale Dicke 7 der Sollbruchnase am Innenumfang 6 des Nadelrollenabstandsstücks bezüglich der Dicke der Nase am Außenumfang 22 der Druckscheibe größer sein. Diese Konfiguration kann gewährleisten, dass die Reste der Sollbruchnase an dem Nadelrollenabstandsstück verbleiben, nachdem sich die Druckscheibe axial innerhalb des Abstandsstücks bewegt. Bei der Alternative, wenn die Nasenreste an der Druckscheibe verbleiben sollen, würde die Umfangsbreite und/oder die axiale Dicke der Nase an der Druckscheibe bezüglich jener Abmessungen am Abstandsstück größer sein.

Bei der Montage eines Drehzapfens an seinem jeweiligen Jocharm 42 (Figur 1) wird ein Joch 40 mit einem Paar Jocharme 42 bereitgestellt, und das Joch befindet sich am proximalen Ende eines der beiden Elemente, einschließlich mindestens einer Welle, die am Kreuzstück oder Zapfenkreuz 14 des Kardangelenks verbunden sind. In dem Jocharm 42 ist ein Drehzapfenaufnahmeloch 44 ausgebildet. Eine in den Figuren 1 und 7 gezeigte Schale 26 wird in der Regel nach Laden des Lagers 19 in die Schale im Loch 44 im Jocharm 42, mit dem geschlossenen Grund 28 der Schale 26 im Loch 44, installiert. Vor Installation der Schale im Loch 44 werden, wie in Figur 7 gezeigt, die Druckscheibe 1 und das Nadelrollenabstandsstück 2, die noch aneinander befestigt sind, durch das offene Ende 27 der Schale 26 passiert und so weit nach innen bewegt, bis das Abstandsstück 2 am Grund 28 der Schale 26 anliegt. Die Scheibenseite 51 wird durch das Abstandsstück 2 vom Grund 28 beabstandet. Als Nächstes wird ein Komplement der Nadellagerrollen 19 in der Schale installiert, wobei die Enden der Rollen an der Innenseite des Abstandsstücks 2 anliegen. Dieses Radiallager 19 in der Lagerschale 26 umfasst eine Umfangsanordnung von sich axial erstreckenden Lagernadeln, die zwischen der Innenseite der Schale 26 und der Außenseite des Drehzapfens 15 rollen und die Drehung des Drehzapfens während des Betriebs des Kardangelenks ermöglichen. Dann wird hinter dem Lager eine optionale Dichtung 31 in der Schale installiert. Die Dichtung ist so bemessen, dass ihr radiales Inneres den später installierten Drehzapfen 15 in Eingriff nimmt, um die Schale 26 abzudichten, jedoch die Drehung des Zapfens zu gestatten. Dann wird die montierte Schale 26 in dem Loch 44 im Jocharm installiert. Als Alternative dazu kann die Schale 26 in dem Loch im Jocharm installiert werden, bevor die anderen Elemente in der Schale installiert werden.

Während des Lagermontageprozesses kann nach Installation des Abstandsstücks und der Druckscheibe in der Schale, vorzugsweise nach Installation des Lagers in der Schale 26 und vor Installation des Drehzapfens 15 in der Drehzapfenschale oder infolge der Installation des Drehzapfens eine axiale Last 12 an einen zur Mitte hin oder um die Achse der Druckscheibe 1 herum angeordneten Knopf 13 angelegt werden. Die axiale Last an der Scheibe verursacht einen vollständigen Bruch aller Sollbruchverbindungsnasen 5. Nach dem Bruch wird die Druckscheibe 1 axial zum geschlossenen Grund 28 der Lagerschale 26 verschoben, wie in Figur 8 gezeigt. Der Drehzapfen 15 wird in der Schale 26 innerhalb des Lagers 19 installiert und zur Druckscheibe 1 geschoben, die danach durch den Drehzapfen im Betrieb angelegte axiale Lasten aufnimmt.

Eine Alternative zur Trennung der Druckscheibe besteht darin, während der Montage des Kardangelenks eine axiale Last über den Drehzapfen 15 des Kreuzstücks 14 des Kardangelenks an die Druckscheibe anzulegen. Nach dem Bruch der Nasen 5 während der Montage des Gelenks bewegen sich die Druckscheibe und der Drehzapfen zusammen weiter in Axialrichtung, bis die erste Seite 51 der Druckscheibe den Grund 28 der Lagerschale 26 berührt und bis der Drehzapfen seine Montageendposition erreicht.

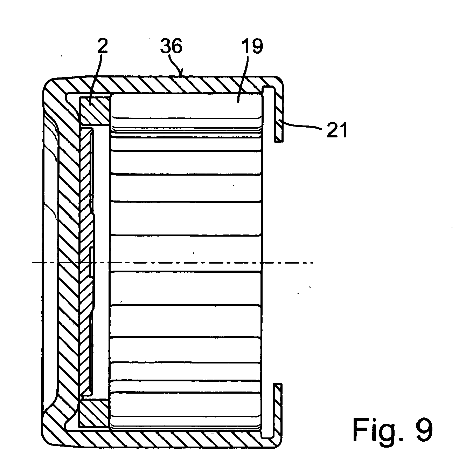

Sollten die Sollbruchverbindungsnasen während der Lagermontage oder während der Kardangelenkmontage vor ihrer bestimmten Zeit oder vor ihres bestimmten Bruchstadiums im Prozess versehentlich brechen, zeigt Figur 6 einen Axialrichtungsvorsprung 17, der allgemein in einem radial äußeren Bereich der zweiten axialen Seite 53 zum Außenumfang der Druckscheibe angeordnet und so positioniert und geformt ist, dass er in Axialrichtung um einen ausreichenden Abstand von der Schale nach außen ragt, dass ein Gleiten der Druckscheibe 1 unter das Nadelrollenabstandsstück 2 verhindert wird, wenn die getrennte Scheibe zum Grund 28 der Schale 26 bewegt wird. Die vergrößerte axiale Dicke der Druckscheibe an ihrem Außenumfang 22 oder in der Nähe davon in der Nähe des Innendurchmessers 6 des Nadelrollenabstandsstücks verhindert dieses unerwünschte Gleiten der Druckscheibe unter das Nadelrollenabstandsstück. Die Mindestdicke 18 des axialen Vorsprungs 17 ist mindestens gleich dem oder größer als der zur Verfügung stehende axiale Zwischenraum, der durch die Dicke des Nadelrollenabstandsstücks 2, die Gesamtlänge der Nadelrollen des Lagers 19, die axiale Position der inneren Dichtung 31 und die axiale Breite der Dichtung definiert wird. Wenn das Lager und die Lagerschale 26 keine innere Dichtung 31 enthalten, wie bei der Ausführungsform in Figur 9, kann der axiale Zwischenraum durch die Dicke des Nadelrollenabstandsstücks, die Nadelrollenlänge und die Innenseite des Lagerflansches 21 definiert werden.

Der axiale Vorsprung 17 weist den zusätzlichen Vorteil auf, dass er verhindert, dass eine Druckscheibe, die sich nach der Montage von dem Nadelrollenabstandsstück getrennt hat, während des Versands, der Handhabung und der Verwendung des Lagers unter das Nadelrollenabstandsstück gleitet.

Der Außenumfang der Druckscheibe 22 ist größer als der durch die radiale Innenseite der Umfangsanordnung der Nadelrollen des Lagers 19 definierte Innendurchmesser 38, um zu verhindern, dass die getrennte Druckscheibe während ihrer Montage in das Kardangelenk aus dem offenen Ende des Lagers heraus fällt. Eine zusätzliche Designoption zur Verhinderung, dass die getrennte Druckscheibe aus dem offenen Ende des Lagers heraus fällt, besteht bei Lagerausführungen mit inneren Dichtungen darin, den Außendurchmesser der Druckscheibe so zu dimensionieren, dass er größer ist als der durch die innere Dichtlippe 34 definierte Innendurchmesser, wie in Figur 7 dargestellt.

Obgleich die vorliegende Erfindung in Bezug auf bestimmte Ausführungen davon beschrieben worden ist, liegen für den Fachmann viele andere Variationen und Modifikationen und andere Verwendungen auf der Hand. Es wird deshalb bevorzugt, dass die vorliegende Erfindung nicht durch die hier angeführte spezielle Offenbarung, sondern nur durch die angehängten Ansprüche begrenzt wird.

## Patentansprüche

1. Aus einer Druckscheibe (1) und einem Abstandsstück (2) bestehende Kombination zur Verwendung mit einem Drehzapfen (15), wobei die Kombination Folgendes umfasst:
ein ringförmiges Abstandsstück (2) mit einer ersten axialen Dicke zwischen einer ersten axialen Seite (52) und einer gegenüberliegenden zweiten axialen Seite (24) entlang einer Axialrichtung (3) und einer axiaien Öffnung mit einem ersten Durchmesser (6) durch das Abstandsstück (2) entlang der Axialrichtung (3), wobei die Öffnung einen Innenumfang aufweist:
eine Druckscheibe (1), von der mindestens ein Teil in der Öffnung des Abstandsstücks angeordnet ist, wobei der Druckscheibenteil mindestens einen Teil eines Scheibenumfangs (22) mit einem zweiten Durchmesser aufweist, der kleiner ist als der erste Durchmesser der Abstandsstücköffnung, wobei die Druckscheibe (1) eine zweite axiale Dicke zwischen einer ersten axialen Seite (51), die in die gleiche Axialrichtung (3) weist wie die erste axiale Seite (52) des Abstandsstücks (2), und einer gegenüberliegenden zweiten axialen Seite (53), die in die gleiche Axialrichtung (3) weist wie die zweite axiale Seite (24) des Abstandsstücks (2), aufweist, wobei die Druckscheibe (1) so in der Abstandsstücköffnung positioniert ist, dass die erste axiale Seite (51) der Druckscheibe (1) axial einwärts in der Öffnung von der ersten axialen Seite (52) des Abstandsstücks (2) und zur zweiten Seite (24) des Abstandsstücks (2) angeordnet ist;
mindestens eine Sollbruchnase (5), die sich zwischen dem Innenumfang (6) des ringförmigen Abstandsstücks (2) an der Öffnung und dem mindestens einen Teil des Umfangs der Druckscheibe (1) erstreckt und damit verbunden ist;
**dadurch gekennzeichnet, dass** die mindestens eine Nase (5) entweder am Innenumfang (6) der Abstandsstücköffnung oder am Umfang (22) des Teils der Druckscheibe (1) im Verhältnis geschwächt ist, so dass bei Anlegen einer Kraft an die Druckscheibe (1) in Axialrichtung (3) zur ersten axialen Seite (52) des axialen Abstandsstücks (2) die mindestens eine Sollbruchnase (5) an einer Stelle davon zum Abstandsstück (2) oder zur Druckscheibe (1), an der die Sollbruchnase (5) geschwächt ist, zerbrochen wird, so dass ein Rest der zerbrochenen Sollbruchnase (5) an der Druckscheibe (1) oder am Abstandsstück (2) bleibt, wo die Sollbruchnase (5) nicht geschwächt ist.

2. Kombination nach Anspruch 1, **dadurch gekennzeichnet, dass** die Sollbruchnase (5) dadurch geschwächt ist, dass sie entweder am Innenumfang (6) des Abstandsstücks (2) oder am Außenumfang (22) der Scheibe (1) eine kleinere Abmessung (11) aufweist, wo die Nase (5) geschwächt ist, und der Rest der Nase entweder am Abstandsstück (2) oder an der Scheibe (1) bleibt, wo die Nase (5) in der Axialrichtung und/oder in einer Umfangsrichtung um das Abstandsstück mindestens eine größere Abmessung aufweist als an ihrer Schwächungsstelle.

3. Kombination nach Anspruch 2, **dadurch gekennzeichnet, dass** die Druckscheibe (1) einen Außenbereich radial einwärts ihres Umfangs und der Sollbruchnase aufweist und die Druckscheibe an ihrer zweiten axialen Seite und an ihrem Außenbereich einen axialen Vorsprung (17) aufweist, so dass die Druckscheibe axial dicker am Außenbereich als radial einwärts des Außenbereichs ist.

4. Kombination nach Anspruch 2, **dadurch gekennzeichnet, dass** die mindestens eine Sollbruchnase (5) am Abstandsstück (2) oder an der Druckscheibe (1), wo die Sollbruchnase nach ihrem Zerbrechen bleibt, entweder axial dicker und/oder um den Umfang breiter ist.

5. Kombination nach Anspruch 2, **dadurch gekennzeichnet, dass** die Sollbruchnase (5) am Abstandsstück (2) axial dicker (7) und/oder um den Umfang breiter ist, so dass die Sollbruchnase bei Zerbrechen der Sollbruchnase am Abstandsstück (2) verbleibt.

6. Kombination nach Anspruch 1, **dadurch gekennzeichnet, dass** die Druckscheibe (1) einen Außenbereich radial einwärts ihres Umfangs und der Sollbruchnase aufweist und die Druckscheibe an ihrer zweiten axiallen Seite und an ihrem Außenbereich einen axialen Vorsprung (17) aufweist, so dass die Druckscheibe axial dicker am Außenbereich als radial einwärts des Außenbereichs ist.

7. Kombination nach Anspruch 1, **dadurch gekennzeichnet, dass** die Druckscheibe eine mittlere Achse (3, 4) und einen mittleren Bereich (13) um die mittlere Achse herum sowie eine axiale Verdickung an ihrem mittleren Bereich (13) aufweist.

8. Kombination nach Anspruch 1, **dadurch gekennzeichnet, dass** die Druckscheibe (1) mehrere Sollbruchnasen (5) aufweist, die um den Umfang der Druckscheibe in Abständen angeordnet sind.

9. Kombination nach Anspruch 1, **dadurch gekennzeichnet, dass** das Abstandsstück (2) zwischen seiner ersten und seiner zweiten axialen Seite eine größere Dicke aufweist als die Dicke (18) der Druckscheibe (1) zwischen ihrer ersten (51) und zweiten axialen Seite (53).

10. Anordnung, die Folgendes umfasst:
eine Lagerschale (26) mit einem Grund (28) und einer offenen Oberseite;
die Kombination nach Anspruch 1, die in der Lagerschale zu ihrem Grund hin angeordnet ist, **dadurch gekennzeichnet, dass** das Abstandsstück (2) so ausgerichtet ist, dass seine erste axiale Seite zum Grund der Schale weist;
mehrere Drehlagerelemente in der Schale (26), die in einer den Innenumfang der Schale in Eingriff nehmenden Anordnung in der Schale angeordnet sind, wobei die Lagerelemente (19) ein inneres axiales Ende zur zweiten axialen Seite des Abstandsstücks aufweisen;
wobei die Druckscheibe (1) zwischen ihrer ersten und ihrer zweiten axialen Seite eine solche Dicke aufweist, dass die Druckscheibe nach dem Zerbrechen der mindestenseinen Sollbruchnase (5) und Bewegen der Druckscheibe zum Grund (28) der Schale (26) und zur ersten axialen Seite des Abstandsstücks von der inneren axialen Seite der Lagerelemente beabstandet ist.

11. Anordnung nach Anspruch 10, **dadurch gekennzeichnet, dass** die Sollbruchnase (5) dadurch geschwächt ist, dass sie entweder am Innenumfang (6) des Abstandsstücks oder am Außenumfang (22) der Scheibe eine kleinere Abmessung (7) aufweist, wo die Nase geschwächt ist, und der Rest der Nase entweder am Abstandsstück oder an der Scheibe bleibt, wo die Nase in der Axialrichtung und/oder in einer Umfangsrichtung mindestens eine größere Abmessung aufweist als an ihrer Schwächungsstelle.

12. Anordnung nach Anspruch 11, **dadurch gekennzeichnet, dass** die Lagerelemente (19) eine Anordnung von sich axial in der Schale (26) erstreckenden Nadellagerelementen (19) umfassen.

13. Anordnung nach Anspruch 10, weiterhin mit einer Dichtung (31) die in der Schale axial auswärts der Lagerelemente (19) angeordnet ist und dahingehend wirkt, die Lagerelemente gegen eine Bewegung aus der Schale (26) heraus zu sperren;
**dadurch gekennzeichnet, dass** die Dichtung (31) ringförmig ist und ein radiales Inneres aufweist, das dahingehend wirkt, gegen einen in der Schale innerhalb der Lagerelemente installierten Drehzapfen abzudichten.

14. Anordnung ach Anspruch 10, **dadurch gekennzeichnet, dass** der Grund (28) der Schale (26) so geformt ist, dass die erste axiale Seite des Abstandsstücks am Grund der Schale anliegt und dass sie die erste axiale Seite der Druckscheibe abstützt, nachdem die Sollbruchnasen zerbrochen und die Druckscheibe zum Grund der Schale bewegt worden ist.

15. Drehzapfenanordnung, die Folgendes umfasst:
einen Drehzapfen (15) mit einem Umfang, einer Achse und einem axial äußeren Ende;
die Anordnung nach Anspruch 10, **dadurch gekennzeichnet, dass** die Lagerelemente (19) in der Schale (26) eine Öffnung umgeben und definieren;
wobei der Drehzapfen (15) in der durch die Lagerelemente definierten Öffnung installiert ist und die Lagerelemente (19) so bemessen sind, dass sie den Umfang des Drehzapfens und den Innenumfang der Lagerschale (26) berühren, so dass die Schale und der Drehzapfen bezüglich einander um die Achse des Drehzapfens und der Anordnung gedreht werden können, wobei die Lagerelemente (19) dahingehend wirken, eine solche Drehung zu gestatten,

16. Anordnung nach Anspruch 15, **dadurch gekennzeichnet, dass** die Sollbruchnase (5) dadurch geschwächt ist, dass sie entweder am Innenumfang des Abstandsstücks oder am Außenumfang der Scheibe eine kleinere Abmessung (27) aufweist, wo die Nase geschwächt ist, und der Rest der Nase entweder am Abstandsstück (2) oder an der Scheibe (1) bleibt, wo die Nase in der Axialrichtung und/oder in einer Umfangsrichtung um das Abstandsstück mindestens eine größere Abmessung aufweist als an ihrer Schwächungsstelle.

17. In Kombination, die Drehzapfenanordnung nach Anspruch 15 und ein eine Halterung enthaltendes Objekt, das zum Aufnehmen der Lagerschale (26) bemessen und geformt ist, **dadurch gekennzeichnet, dass** das Objekt die Schale in dem Loch so hält, dass sie sich nicht drehen kann, während der Drehzapfen in der Schale gedreht werden kann.

18. Kombination nach Anspruch 17, **dadurch gekennzeichnet, dass** das die Aufnahme enthaltende Objekt ein Jocharm ist.

19. In Kombination:
ein Joch (140) mit einem Jocharm (42) und einem Loch (44) im Jocharm;
ein Kreuzstück (14) für ein Kardangelenk, **dadurch gekennzeichnet, dass** das Kreuzstück einen Körper aufweist, von dem mehrere Drehzapfen (15) nach außen ragen;
die Drehzapfenanordnung nach Anspruch 15 an mindestens einem der Drehzapfen des Kreuzstücks, wobei das Loch im Jocharm den mindestens einen Drehzapfen und seine Schale darin aufnimmt.

20. Kombination nach Anspruch 19, **dadurch gekennzeichnet, dass** die Sollbruchnase (5) dadurch geschwächt ist, dass sie entweder am Innenumfang des Abstandsstückes oder am Außenumfang der Scheibe eine kleinere Abmessung (7) aufweist, wo die Nase geschwächt ist, und der Rest der Nase entweder am Abstandsstück oder an der Scheibe bleibt, wo die Nase in der Axialrichtung und/oder in einer Umfangsrichtung um das Abstandsstück mindestens eine größere Abmessung aufweist als an ihrer Schwächungsstelle.

## Claims

1. Combination consisting of a pressure disc (1) and a spacer piece (2) for use with a pivot pin (15), the combination comprising the following:
an annular spacer piece (2) with a first axial thickness between a first axial side (52) and an opposite second axial side (24) along an axial direction (3) and an axial opening with a first diameter (6) by the spacer piece (2) along the axial direction (3), the opening having an inner circumference;
a pressure disc (1), of which at least one part is arranged in the opening of the spacer piece, the pressure disc part having at least one part of a disc circumference (22) with a second diameter which is smaller than the first diameter of the spacer piece opening, the pressure disc (1) having a second axial thickness between a first axial side (51), which points in the same axial direction (3) as the first axial side (52) of the spacer piece (2), and an opposite second axial side (53) which points in the same axial direction (3) as the second axial side (24) of the spacer piece (2), the pressure disc (1) being positioned in the spacer piece opening in such a way that the first axial side (51) of the pressure disc (1) is arranged axially inwardly in the opening from the first axial side (52) of the spacer piece (2) and to the second side (24) of the spacer piece (2);
at least one predetermined break lug (5) which extends between the inner circumference (6) of the annular spacer piece (2) at the opening and the at least one part of the circumference of the pressure disc (1) and is connected thereto;
**characterized in that** the at least one lug (5) is weakened proportionally either at the inner circumference (6) of the spacer piece opening or at the circumference (22) of the part of the pressure disc (1), with the result that, if a force is applied to the pressure disc (1) in the axial direction (3) towards the first axial side (52) of the axial spacer piece (2), the at least one predetermined break lug (5) is broken at a point thereof with respect to the spacer piece (2) or with respect to the pressure disc (1), at which point the predetermined break lug (5) is weakened, with the result that a rest of the broken predetermined break lug (5) remains on the pressure disc (1) or on the spacer piece (2), where the predetermined break lug (5) is not weakened.

2. Combination according to Claim 1, **characterized in that** the predetermined break lug (5) is weakened by the fact that it has a smaller dimension (11), where the lug (5) is weakened, either on the inner circumference (6) of the spacer piece (2) or on the outer circumference (22) of the disc (1), and the rest of the lug remains either on the spacer piece (2) or on the disc (1), where the lug (5) has at least one greater dimension in the axial direction and/or in a circumferential direction around the spacer piece than at its weakened point.

3. Combination according to Claim 2, **characterized in that** the pressure disc (1) has an outer region radially inwardly of its circumference and the predetermined break lug, and the pressure disc has an axial projection (17) on its second axial side and on its outer region, with the result that the pressure disc is axially thicker at the outer region than radially inwardly of the outer region.

4. Combination according to Claim 2, **characterized in that** the at least one predetermined break lug (5) is either axially thicker and/or is wider around the circumference on the spacer piece (2) or on the pressure disc (1), where the predetermined break lug remains after breaking.

5. Combination according to Claim 2, **characterized in that** the predetermined break lug (5) is axially thicker (7) and/or is wider around the circumference on the spacer piece (2), with the result that the predetermined break lug remains on the spacer piece (2) when the predetermined break lug breaks.

6. Combination according to Claim 1, **characterized in that** the pressure disc (1) has an outer region radially inwardly of its circumference and the predetermined break lug, and the pressure disc has an axial projection (17) on its second axial side and on its outer region, with the result that the pressure disc is axially thicker at the outer region than radially inwardly of the outer region.

7. Combination according to Claim 1, **characterized in that** the pressure disc has a middle axis (3, 4) and a middle region (13) around the middle axis and an axial thickened portion on its middle region (13).

8. Combination according to Claim 1, **characterized in that** the pressure disc (1) has a plurality of predetermined break lugs (5) which are arranged at spacings around the circumference of the pressure disc.

9. Combination according to Claim 1, **characterized in that** the spacer piece (2) has a greater thickness between its first and its second axial side than the thickness (18) of the pressure disc (1) between its first (51) and second axial side (53).

10. Arrangement which comprises the following:
a bearing shell (26) having a bottom (28) and an open top side;
the combination according to Claim 1 which is arranged in the bearing shell towards its bottom, **characterized in that** the spacer piece (2) is oriented in such a way that its first axial side points towards the bottom of the shell;
a plurality of pivot bearing elements in the shell (26) which are arranged in an arrangement in the shell, which arrangement engages with the inner circumference of the shell, the bearing elements (19) having an inner axial end towards the second axial side of the spacer piece;
the pressure disc (1) having such a thickness between its first and its second axial side that the pressure disc is spaced apart from the inner axial side of the bearing elements after breaking of the at least one predetermined break lug (5) and moving of the pressure disc towards the bottom (28) of the shell (26) and towards the first axial side of the spacer piece.

11. Arrangement according to Claim 10, **characterized in that** the predetermined break lug (5) is weakened by virtue of the fact that it has a smaller dimension (7), where the lug is weakened, either on the inner circumference (6) of the spacer piece or on the outer circumference (22) of the disc, and the rest of the lug remains either on the spacer piece or on the disc, where the lug has at least one greater dimension in the axial direction and/or in a circumferential direction than at its weakened point.

12. Arrangement according to Claim 11, **characterized in that** the bearing elements (19) comprise an arrangement of needle bearing elements (19) which extend axially in the shell (26).

13. Arrangement according to Claim 10, furthermore having a seal (31) which is arranged in the shell axially outwardly of the bearing elements (19) and acts so as to block the bearing elements against a movement out of the shell (26);
**characterized in that** the seal (31) is annular and has a radial interior which acts so as to seal against a pivot pin which is installed in the shell inside the bearing elements.

14. Arrangement according to Claim 10, **characterized in that** the bottom (28) of the shell (26) is shaped in such a way that the first axial side of the spacer piece bears against the bottom of the shell, and that it supports the first axial side of the pressure disc after the predetermined break lugs have been broken and the pressure disc has been moved towards the bottom of the shell.

15. Pivot pin arrangement which comprises the following:
a pivot pin (15) having a circumference, an axis and an axially outer end;
the arrangement according to Claim 10, **characterized in that** the bearing elements (19) surround and define an opening in the shell (26);
the pivot pin (15) being installed in the opening which is defined by the bearing elements, and the bearing elements (19) being dimensioned such that they make contact with the circumference of the pivot pin and the inner circumference of the bearing shell (26), with the result that the shell and the pivot pin can be rotated with regard to one another around the axis of the pivot pin and the arrangement, the bearing elements (19) acting so as to permit a rotation of this type.

16. Arrangement according to Claim 15, **characterized in that** the predetermined break lug (5) is weakened by virtue of the fact that it has a smaller dimension (27), where the lug is weakened, either on the inner circumference of the spacer piece or on the outer circumference of the disc, and the rest of the lug remains either on the spacer piece (2) or on the disc (1), where the lug has at least one greater dimension in the axial direction and/or in a circumferential direction around the spacer piece than at its weakened point.

17. In combination, the pivot pin arrangement according to Claim 15 and an object which contains a holding device and is dimensioned and shaped to receive the bearing shell (26), **characterized in that** the object holds the shell in the hole in such a way that it cannot rotate, whereas the pivot pin can be rotated in the shell.

18. Combination according to Claim 17, **characterized in that** the object which contains the receptacle is a yoke arm.

19. In combination:
a yoke (40) having a yoke arm (42) and a hole (44) in the yoke arm;
a crosspiece (14) for a cardan joint, **characterized in that** the crosspiece has a body, from which a plurality of pivot pins (15) protrude to the outside;
the pivot pin arrangement according to Claim 15 on at least one of the pivot pins of the crosspiece, the hole in the yoke arm receiving the at least one pivot pin and its shell therein.

20. Combination according to Claim 19, **characterized in that** the predetermined break lug (5) is weakened by virtue of the fact that it has a smaller dimension (7), where the lug is weakened, either on the inner circumference of the spacer piece or on the outer circumference of the disc, and the rest of the lug remains either on the spacer piece or on the disc, where the lug has at least one greater dimension in the axial direction and/or in a circumferential direction around the spacer piece than at its weakened point.

## Revendications

1. Combinaison constituée d'un disque de pression (1) et d'un élément d'espacement (2) pour l'utilisation avec un tourillon (15), la combinaison comprenant :
un élément d'espacement annulaire (2) ayant une première épaisseur axiale entre un premier côté axial (52) et un deuxième côté axial opposé (24) le long d'une direction axiale (3) et une ouverture axiale ayant un premier diamètre (6) traversant l'élément d'espacement (2) le long de la direction axiale (3), l'ouverture présentant une périphérie interne ;
un disque de pression (1) dont au moins une partie est disposée dans l'ouverture de l'élément d'espacement, la partie du disque de pression présentant au moins une partie d'une périphérie de disque (22) ayant un deuxième diamètre qui est inférieur au premier diamètre de l'ouverture de l'élément d'espacement, le disque de pression (1) présentant une deuxième épaisseur axiale entre un premier côté axial (51) qui est tourné dans la même direction axiale (3) que le premier côté axial (52) de l'élément d'espacement (2) et un deuxième côté axial opposé (53) qui est tourné dans la même direction axiale (3) que le deuxième côté axial (24) de l'élément d'espacement (2), le disque de pression (1) étant positionné dans l'ouverture de l'élément d'espacement de telle sorte que le premier côté axial (51) du disque de pression (1) soit disposé axialement vers l'intérieur dans l'ouverture depuis le premier côté axial (52) de l'élément d'espacement (2) et vers le deuxième côté (24) de l'élément d'espacement (2) ;
au moins un ergot destiné à la rupture (5) qui s'étend entre la périphérie interne (6) de l'élément d'espacement annulaire (2) au niveau de l'ouverture et l'au moins une partie de la périphérie du disque de pression (1) et qui est connecté à celui-ci ;
**caractérisée en ce que** l'au moins un ergot (5) est relativement affaibli soit au niveau de la périphérie interne (6) de l'ouverture de l'élément d'espacement soit au niveau de la périphérie (22) de la partie du disque de pression (1), de sorte que lors de l'application d'une force sur le disque de pression (1) dans la direction axiale (3) vers le premier côté axial (52) de l'élément d'espacement axial (2), l'au moins un ergot destiné à la rupture (5) soit rompu au niveau d'une zone de celui-ci vers l'élément d'espacement (2) ou vers le disque de pression (1), au niveau de laquelle l'ergot destiné à la rupture (5) est affaibli, de sorte qu'un reste de l'ergot destiné à la rupture (5) rompu demeure sur le disque de pression (1) ou sur l'élément d'espacement (2), où l'ergot destiné à la rupture (5) n'est pas affaibli.

2. Combinaison selon la revendication 1, **caractérisée en ce que** l'ergot destiné à la rupture (5) est affaibli par le fait qu'il présente, soit au niveau de la périphérie interne (6) de l'élément d'espacement (2) soit au niveau de la périphérie externe (22) du disque (1), une plus petite dimension (11) où l'ergot (5) est affaibli et le reste de l'ergot demeure soit sur l'élément d'espacement (2) soit sur le disque (1), où l'ergot (5), dans la direction axiale et/ou dans une direction périphérique autour de l'élément d'espacement, présente au moins une plus grande dimension qu'au niveau de sa zone d'affaiblissement.

3. Combinaison selon la revendication 2, **caractérisée en ce que** le disque de pression (1) présente une région extérieure radialement vers l'intérieur de sa périphérie et de l'ergot destiné à la rupture, et le disque de pression présente, au niveau de son deuxième côté axial et de sa région extérieure, une saillie axiale (17) de sorte que le disque de pression soit axialement plus épais au niveau de la région extérieure que radialement à l'intérieur de la région extérieure.

4. Combinaison selon la revendication 2, **caractérisée en ce que** l'au moins un ergot destiné à la rupture (5) au niveau de l'élément d'espacement (2) ou au niveau du disque de pression (1) où l'ergot destiné à la rupture demeure après sa rupture, est axialement plus épais et/ou plus large autour de la périphérie.

5. Combinaison selon la revendication 2, **caractérisée en ce que** l'ergot destiné à la rupture (5) au niveau de l'élément d'espacement (2) est plus épais axialement (7) et/ou est plus large autour de la périphérie, de sorte que l'ergot destiné à la rupture, lors de la rupture de l'ergot destiné à la rupture, demeure sur l'élément d'espacement (2).

6. Combinaison selon la revendication 1, **caractérisée en ce que** le disque de pression (1) présente une région extérieure radialement à l'intérieur de sa périphérie et de l'ergot destiné à la rupture et le disque de pression présente, au niveau de son deuxième côté axial, et au niveau de sa région extérieure, une saillie axiale (17) de sorte que le disque de pression soit plus épais axialement au niveau de la région extérieure que radialement à l'intérieur de la région extérieure.

7. Combinaison selon la revendication 1, **caractérisée en ce que** le disque de pression présente un axe médian (3, 4) et une région centrale (13) autour de l'axe médian ainsi qu'un épaississement axial au niveau de sa région centrale (13).

8. Combinaison selon la revendication 1, **caractérisée en ce que** le disque de pression (1) présente plusieurs ergot destinés à la rupture (5) qui sont disposés à intervalles sur la périphérie du disque de pression.

9. Combinaison selon la revendication 1, **caractérisée en ce que** l'élément d'espacement (2) présente entre son premier et son deuxième côté axial une plus grande épaisseur que l'épaisseur (18) du disque de pression (1) entre son premier (51) et son deuxième côté axial (53).

10. Agencement comprenant :
une coque de palier (26) ayant une base (28) et un côté supérieur ouvert ;
la combinaison selon la revendication 1, qui est disposée dans la coque de palier en direction de sa base, **caractérisé en ce que** l'élément d'espacement (2) est orienté de telle sorte que son premier côté axial soit tourné vers la base de la coque ;
plusieurs éléments de palier pivotant dans la coque (26), qui sont disposés dans la coque dans un agencement s'engageant avec la périphérie interne de la coque, les éléments de palier (19) présentant une extrémité axiale interne vers le deuxième côté axial de l'élément d'espacement ;
le disque de pression (1) présentant entre son premier et son deuxième côté axial une épaisseur telle que le disque de pression, après la rupture de l'au moins un ergot destiné à la rupture (5) et le déplacement du disque de pression vers la base (28) de la coque (26) et vers le premier côté axial de l'élément d'espacement, soit espacé du côté axial interne des éléments de palier.

11. Agencement selon la revendication 10, **caractérisé en ce que** l'ergot destiné à la rupture (5) est affaibli par le fait qu'il présente soit au niveau de la périphérie interne (6) de l'élément d'espacement soit au niveau de la périphérie externe (22) du disque une plus petite dimension (7), où l'ergot est affaibli, et le reste de l'ergot demeure soit sur l'élément d'espacement soit sur le disque, où l'ergot présente, dans la direction axiale et/ou dans une direction périphérique, au moins une plus grande dimension qu'au niveau de sa zone d'affaiblissement.

12. Agencement selon la revendication 11, **caractérisé en ce que** les éléments de palier (19) comprennent un agencement d'éléments de palier à aiguilles (19) s'étendant axialement dans la coque (26).

13. Agencement selon la revendication 10, comprenant en outre un joint d'étanchéité (31) qui est disposé dans la coque axialement vers l'extérieur des éléments de palier (19) et qui agit de manière à bloquer les éléments de palier contre un mouvement de sortie hors de la coque (26) ; **caractérisé en ce que** le joint d'étanchéité (31) est annulaire et présente une partie intérieure radiale qui agit de manière à réaliser l'étanchéite vis-à-vis d'un tourillon installé dans la coque à l'intérieur des éléments de palier.

14. Agencement selon la revendication 10, **caractérisé en ce que** la base (28) de la coque (26) est formée de telle sorte que le premier côté axial de l'élément d'espacement s'applique contre la base de la coque et **en ce qu'**il supporte le premier côté axial du disque de pression après que les ergots destinés à la rupture ont été rompus et que le disque de pression a été déplacé vers la base de la coque.

15. Agencement de tourillon, comprenant :
un tourillon (15) avec une périphérie, un axe et une extrémité axialement extérieure ;
l'agencement selon la revendication 10, **caractérisé en ce que** les éléments de palier (19) dans la coque (26) entourent et définissent une ouverture ;
le tourillon (15) étant installé dans l'ouverture définie par les éléments de palier et les éléments de palier (19) étant dimensionnés de telle sorte qu'ils viennent en contact avec la périphérie du tourillon et la périphérie interne de la coque de palier (26), de telle sorte que la coque et le tourillon puissent être tournés l'un par rapport à l'autre autour de l'axe du tourillon et de l'agencement, les éléments de palier (19) agissant de manière à permettre une telle rotation.

16. Agencement selon la revendication 15, **caractérisé en ce que** l'ergot destiné à la rupture (5) est affaibli par le fait qu'il présente soit au niveau de la périphérie interne de l'élément d'espacement soit au niveau de la périphérie externe du disque une plus petite dimension (27) où l'ergot est affaibli, et le reste de l'ergot demeure soit sur l'élément d'espacement (2) soit sur le disque (1), où l'ergot présente dans la direction axiale et/ou dans une direction périphérique autour de l'élément d'espacement au moins une plus grande dimension qu'au niveau de sa zone d'affaiblissement.

17. Combinaison de l'agencement de tourillon selon la revendication 15 et d'un objet contenant une fixation, qui est dimensionné et formé pour recevoir la coque de palier (26), **caractérisée en ce que** l'objet retient la coque dans le trou de telle sorte qu'elle ne puisse pas tourner tandis que le tourillon peut tourner dans la coque.

18. Combinaison selon la revendication 17, **caractérisée en ce que** l'objet contenant le logement est un bras de culasse.

19. Combinaison suivante :
une culasse (140) comprenant un bras de culasse (42) et un trou (44) dans le bras de culasse ;
un croisillon (14) pour une articulation à cardan, **caractérisée en ce que** le croisillon présente un corps depuis lequel font saillie vers l'extérieur plusieurs tourillons (15) ;
l'agencement de tourillon selon la revendication 15 au niveau d'au moins l'un des tourillons du croisillon, le trou dans le bras de culasse recevant dans celui-ci l'au moins un tourillon et sa coque.

20. Combinaison selon la revendication 19, **caractérisée en ce que** l'ergot destiné à la rupture (5) est affaibli par le fait qu'il présente soit au niveau de la périphérie interne de l'élément d'espacement soit au niveau de la périphérie externe du disque une plus petite dimension (7) où l'ergot est affaibli, et le reste de l'ergot demeure soit sur l'élément d'espacement soit sur le disque, où l'ergot présente dans la direction axiale et/ou dans une direction périphérique autour de l'élément d'espacement au moins une plus grande dimension qu'au niveau de sa zone d'affaiblissement.
